# EUROPÄISCHE PATENTSCHRIFT

(11) **EP 2 440 612 B1**
(45) Veröffentlichungstag und Bekanntmachung des Hinweises auf die Patenterteilung: **15.04.2015**
(21) Anmeldenummer: 10720443.0
(22) Anmeldetag: 01.06.2010
(51) Int. Cl.: C08L 9/06, C08L 21/00, C08L 53/02, G10K 11/16

(54) **VULKANISIERBARE ZUSAMMENSETZUNG MIT AKUSTISCHEN DÄMPFUNGSEIGENSCHAFTEN**
VULCANIZABLE COMPOSITION HAVING ACOUSTIC ATTENUATING PROPERTIES
COMPOSITION VULCANISABLE PRÉSENTANT DES PROPRIÉTÉS D'AMORTISSEMENT ACOUSTIQUE

(30) Priorität: 08.06.2009 DE 102009026824
(43) Veröffentlichungstag der Anmeldung: 18.04.2012
(73) Patentinhaber: Henkel AG & Co. KGaA, 40589 Düsseldorf (DE)
(72) Erfinder: KOHLSTRUNG, Rainer, 68723 Plankstadt (DE); YAMADA, Takehito, 69115 Heidelberg (DE)
(86) Internationale Anmeldenummer: PCT/EP2010/057591
(87) Internationale Veröffentlichungsnummer: WO 2010/142563

(56) Entgegenhaltungen:
- EP-A1- 1 035 164
- WO-A1-2009/036784
- DE-A1- 4 441 656
- US-A1- 2007 299 193

## Beschreibung

Die vorliegende Erfindung betrifft eine heiß härtbare Zusammensetzung, die nach der Härtung einerseits akustische Dämpfungseigenschaften aufweist und die andererseits mindestens eine weitere (mechanische) Funktion erfüllen kann, beispielsweise als Unterfütterungsmasse oder als Kleb- oder Dichtstoff. Sie kann aber auch lediglich als akustisch dämpfende Beschichtung eingesetzt werden. Sie hat den Vorteil, bei Raumtemperatur oder im erwärmten Zustand mit üblichen Pumpen förderbar zu sein, was die Fabrikation vorgefertigter Teile (z.B. im Spritzguss) oder spezielle Extrusionstechniken unnötig macht. Der Anwendungsschwerpunkt liegt im Fahrzeugbau und in der Geräteindustrie (insbesondere Geräte mit Motoren, die zu einer Geräuschentwicklung führen)

Im heutigen Fahrzeugbau (PKW / LKW / Bus / Zug) werden Anbauteile, Beplankungen, aber auch beispielsweise der Dachbereich und der Fahrzeugboden mit akustisch dämpfenden Massen ausgerüstet, um die verschiedenen Schwingungen der Struktur und damit die Geräuschübertragungen im Anwendungsbereich von -40 bis +90 °C zu mindern bzw. zu verhindern. Diese Dämpfungsmassen sind vielfach auf Basis von Bitumen in Form von Matten im Markt, die speziell auf jede Fahrzeuggeometrie zugeschnitten werden müssen. Spritzbare und extrudierbare Dämpfungsmassen auf Basis von Kautschuk, Epoxy und wässrigen (Acrylat-) Dispersionen sind ebenfalls bekannt. Alle diese Dämpfungsmassen werden flächig hauptsächlich im Rohbau oder im Lackbereich auf das Fahrzeug aufgebracht. Zusätzlich werden insbesondere bei Anbauteilen und Beplankungen, aber auch im Dachbereich, so genannte Unterfütterungen zwischen der Außenhaut und entsprechenden Spriegeln oder Sicherheits- und Verstärkungselementen appliziert, um das Vibrieren der Außenhaut und das Aneinanderschlagen der einzelnen Bauteile des Fahrzeugs zu verhindern sowie um entsprechende Abstände der Bauteilgruppen zu garantieren. Zusätzlich wird über die Festigkeit der Unterfütterung die Fahrzeugstruktur verstärkt. Teilweise haben diese Unterfütterungen auch Abdichtfunktionen. Die Unterfütterungen können als pumpbare Produkte, aber auch als direkt extrudierbare oder extrudierte oder spritzgegossene Formteile im Herstellungsprozess eines Fahrzeugs eingesetzt werden und sind meist auf Kautschukbasis aufgebaut. Aber auch Acrylat, Epoxy, EVA oder PVC als Rohstoffbasis sind bekannt.

EP 1035164 A1 offenbart eine Kautschuk-Zusammensetzung enthaltend, bezogen auf ihre Kautschuk-Komponente, 100 Gewichtsteile mindestens eines festen Dien-basierten Elastomers ausgewählt aus Homopolymeren und Copolymeren konjugierter Diene und Copolymere mindestens eines konjugierten Diens mit einer vinylaromatischen Verbindung ausgewählt aus Styrol und alpha-Methylstyrol, wobei die genannten Elastomere eine Tg von kleiner als +10°C aufweisen und wobei mindestens 50 Gewichtsprozent der genannten Elastomere eine Tg oberhalb von -40°C aufweisen. Weiterhin enthält die Zusammensetzung 5 bis 50 Gewichtsteile eines flüssigen Polymers mit hohem Vinyl-Polybutadienanteil, das einen Vinyl(1,2-)-Gehalt im Bereich von 40 is 95 % und eine Tg im Bereich von -5°C bis -40°C aufweist. Die Zusammensetzung wird mit Schwefel gehärtet. Sie eignet sich als Faser für Autoreifen.

US 2007/299193 A1 offenbart eine spritzbare Kautschuk-Dämpfungszusammensetzung mit geringer Viskosität, die folgende Komponenten enthält: a) 5-50 Gewichts-% flüssige Polyene mit einem massenmittleren Molgewicht unterhalb von 20.000, b) ein Vulkanisationssystem ausgewählt aus: i) Schwefel und einem oder mehreren organischen Beschleunigern und Metalloxide, ii) peroxidischen Vulkanisationssystemen, iii) Chinonen, Chinondioximen und Nitrosobenzol, c) 0,5 - 15 Gewichtsprozent Kurzfasern mit einer durchschnittlichen Faserlänge von 50 µm bis 500 µm.

WO 2009/036784 betrifft ein stark dämpfendes expandierbares Material mit folgender Zusammensetzung: a) 3 bis 40 Gewichtsprozent eines ersten thermoplastischen Elastomers mit einer ersten Glasübergangstemperatur, b) 3 bis 40 Gewichtsprozent eines zweiten thermoplastischen Elastomers mit einer zweiten Glasübergangstemperatur, wobei sich die erste und die zweite Glasübergangstemperatur um mindestens 10 °C unterscheiden, c) 5 bis 50 Gewichtsprozent mindestens eines thermoplastischen Polymers ausgewählt aus Polymeren und Copolymeren mit mindestens einer polymerisierbaren C = C Doppelbindung, d) 0 bis 30 Gewichtsprozent mindestens eines klebrigen Harzes, e) mindestens ein latentes chemisches Treibmittel in einer solchen Menge, dass das expandierbare Material um mindestens 50 Volumenprozent expandiert, wenn es für mindestens 20 Minuten auf eine Temperatur von 150 °C erhitzt wird, wobei die Summe der Komponenten a) bis e) weniger als 100 Gewichtsprozent beträgt und wobei der Rest auf 100 Gewichtsprozent aus weiteren Komponenten oder Hilfsstoffen besteht.
Für die Dämpfung und die Unterfütterung sind also nach dem Stand der Technik jeweils mindestens zwei verschiedene Materialien im Fahrzeugbau im Einsatz, die in unterschiedlicher Ausprägung je nach Bedarf in den verschiedenen Fahrzeugbereichen und je nach Hersteller eingesetzt werden. Dies bedingt für den Kunden folgende Nachteile:
- eine aufwendige Logistik für mindestens zwei verschiedene Produkte,
- Verwaltungskosten und Aufwand zur Verwaltung von verschiedenen Artikeln und Produkten,
- verschiedene spezifische Applikationsanlagen für die verschiedenen Produkte und damit hohe Investitionskosten,
- Platzbedarf für verschiedene Applikationseinheiten,
- aufwändige Fahrzeugdesigns, um verschiedene Produkte auf die Karosse aufbringen zu können.

Weiterhin wird durch das Aufbringen von mindestens zwei verschiedenen Produkten die Fahrzeugmasse durch die Materialien zum Teil stark erhöht, um die gewünschten Effekte zu erzielen, so dass der Kraftstoffverbrauch durch dieses Gewicht steigt. So werden akustisch wirksame Produkte meist flächig auf die Außenhaut oder den Fahrzeugunterboden aufgebracht, während Unterfütterungen auf entsprechende Spriegel oder Verstärkungsteile oder einfach zwischen zwei Bleche appliziert werden. Dies heißt, für beide Produktgruppen gibt es unterschiedliche Wirkorte.

Alle diese oben beschriebenen Produkte und Funktionen werden hauptsächlich mittels pumpbaren Produkten beim Fahrzeughersteller ("Original Equipment Manufacturer" = OEM) direkt appliziert.

Auch Weiße Ware wie Waschmaschinen, Wäschetrockner, Geschirrspülmaschinen, etc. werden nach dem Stand der Technik mittels Dämpfungsmatten akustisch gedämmt.

Zur Lösung dieser Probleme wird erfindungsgemäß vorgesehen, die Funktionen der akustischen Dämpfung und die Funktionen der Unterfütterung bzw. Verklebung oder Abdichtung in einem Produkt zu vereinigen. Es gibt zwar bereits die Möglichkeit, ein solches Produkt in extrudierfähiger bzw. spritzgussfähiger Variante herzustellen, aber die Möglichkeit, ein solches Produkt als pumpfähiges Produkt herzustellen, scheint es bisher nicht zu geben. Da die Applikation bei den Fahrzeugherstellern aufgrund des hohen Automatisierungsgrades vorwiegend auf pumpbare Produkte ausgelegt ist, die über Roboter aufgetragen werden, ist es wünschenswert, auch eine pumpbare Variante eines Kombinationsprodukts aus Unterfütterung und akustisch wirksamer Dämpfungsmasse herzustellen. Herkömmliche Unterfütterungsklebstoffe, wie sie derzeit im Fahrzeugbau eingesetzt werden, zeigen keine bzw. nur sehr geringfügige Dämpfungseigenschaften.

Die Deutsche Patentanmeldung DE 10 2005 00305 beschreibt eine spritzbare, niedrigviskose Kautschukdämpfungsmasse auf der Basis von natürlichen und/oder synthetischen olefinische Doppelbindungen enthaltenden Elastomeren und Vulkanisationsmitteln, die
a) 5-50 Gew. % flüssige(s) Polyen(e) mit einem Molekulargewicht unter 20000,
b) ein Vulkanisationssystem ausgewählt aus der Gruppe, bestehend aus Schwefel und einem oder mehreren organischen Beschleuniger(n) und Metalloxid(en),
   peroxidischen Vulkanisationssystemen oder
   Chinonen, Chinondioximen oder Dinitrosobenzol, ggf. in Kombination mit organischen Beschleunigern und/oder Metalloxid(en)
c) Kurzfasern mit einer mittleren Faserlänge von 50 µm bis 500 µm, vorzugsweise 100 µm bis 250 µm, wobei die Masse 0,5 bis 15 Gew. % Kurzfasern enthält,
d) ggf. weitere Zusätze ausgewählt aus der Gruppe gebildet durch
   Thermoplastische Polymere in Form von fein zerteilten Pulvern,
   Füllstoffe,
   Leichtfüllstoffe,
   Klebrigmacher und/oder Haftvermittler,
   Extenderöle,
   Alterungsschutzmittel,
   Rheologiehilfsmittel
enthält.

In der deutschen Patentanmeldung DE 10 2006 016577 werden heiß härtende, reaktive Zusammensetzungen auf Basis von natürlichen und/oder synthetischen olefinische Doppelbindungen enthaltenen Elastomeren und Vulkanisationsmitteln beschrieben, die mindestens ein flüssiges Polyen mit einem Molekulargewicht zwischen 400 und 80.000 sowie mindestens ein flüssiges Polybutadien mit enger Molekulargewichtsverteilung und einer Mikrostruktur von 10 bis 20 % vinylischen 1,2-Doppelbindungen, 50 bis 60 % trans 1,4-Doppelbindungen und 25 bis 35 % cis 1,4- Doppelbindungen im Molekül enthalten. Weiterhin enthalten diese Zusammensetzungen ein Vulkanisationssystem aus Schwefel und Beschleunigern und/oder gegebenenfalls Chinonoximen. Diese Zusammensetzungen eignen sich zur Verwendung als einkomponentiger Klebstoff, Dichtstoff oder Beschichtungsmasse im Automobilbau mit hohen Zugscherfestigkeiten und hoher Schlagschälfestigkeit, insbesondere auch bei tiefen Temperaturen. Akustisches Dämpfungsverhalten wird hier nicht erwähnt.

Das weiter oben bereits genannte Dokument WO2009/036784 offenbart ein expandierbares und heißhärtbares Material mit akustischen Dämpfungseigenschaften, dessen Hauptkomponenten zwei unterschiedliche Styrol-Isopren-Styrol Copolymere mit Glastemperaturen von -13°C und +8°C sowie ein Vulkanisationssystem sind. Die eingesetzten Block-Copolymere sind bei Raumtemperatur fest, so dass Zusammensetzungen gemäß diesem Dokument bei Raumtemperatur ebenfalls fest sind. Die Zusammensetzungen können bei erhöhter Temperatur durch Extrusion geformt werden. Bei Temperaturen von unterhalb 60°C pumpbare Massen werden in diesem Dokument nicht erwähnt und gemäß dessen Lehre offensichtlich auch nicht erhalten.

Ein Gegenstand der vorliegenden Erfindung ist eine thermisch härtbare Zusammensetzung, enthaltend, bezogen auf die gesamte Zusammensetzung
a) 5 bis 90 Gew.-% eines olefinische Doppelbindungen enthaltenden Copolymers auf Basis eines Diens und eines aromatisch substitiuierten Olefins, wobei das Copolymer bei 22 °C flüssig oder pastös ist, eine Glastemperatur, gemessen nach einer DSC-Methode, zwischen - 30 °C und + 15 °C aufweist, und der Vinyl-Anteil im Dienanteil mindestens 20 mol% beträgt,
b) ein Vulkanisationssystem ausgewählt aus der Gruppe bestehend aus:
   b1) Schwefel und einem oder mehreren Beschleuniger(n),
   b2) peroxidischen oder disulfidischen Vulkanisationssystemen
   b3) Chinonen, Chinondioximen oder Dinitrosobenzol

Die erfindungsgemäße Zusammensetzung weist nach der thermischen Härtung intrinsische Schwingungsdämpfungseigenschaften auf. Unter "intrinsischen Schwingungsdämpfungseigenschaften" versteht man die Fähigkeit zur Umwandlung von mechanischer Schwingungsenergie in Wärme. Die Amplitude einer angeregten Schwingung nimmt also in kurzer Zeit rasch ab. Diese Eigenschaft der gehärteten Zusammensetzung kann dadurch erkannt werden, dass man ihr Schwingungsdämpfungsverhalten mit einer DMA-Methode misst, wie sie weiter unten beschrieben wird.

Für dasCopolymer a) ist das Merkmal "flüssig" so zu verstehen, dass das Produkt unter dem Einfluss der Schwerkraft aus einem Behälter ausgegossen werden kann. Als "pastös" wird ein Produkt bezeichnet, das zu einer gleichmäßigen Schicht ausgestrichen werden kann. Die Glastemperatur für die Copolymere a) wird durch "Differential Scanning Calorimetry" ("DSC" = Differenz-Thermoanalyse) bestimmt, da diese bei Raumtemperatur nicht fest sind. Dagegen beziehen sich die weiter unten angegebenen Glastemperaturen der ausgehärteten kompletten Zusammensetzung, die bei Raumtemperatur fest ist, auf ihre Bestimmung mittels "Dynamisch-mechanischer Analyse" ("DMA").

Die Glastemperatur der ausgehärteten Masse liegt vorzugsweise im Bereich von etwa -5 °C bis etwa +40 °C, da dann das Schwingungsdämpfungsverhalten im Bereich üblicher Umgebungstemperaturen optimal ist. Die Glastemperatur der ausgehärteten Masse wird mit einer "Dynamisch-Mechanischen Analyse" (DMA) wie folgt bestimmt:
Die Messung erfolgt in Anlehnung an DIN EN ISO 6721:
   Messgerät: Metravib 01 dB DMA⁺100
   Auswertesoftware: Dynatest
   Probendimension: ca. 20 x 10 x 20 mm (B x H x T)
   Probenhalterung: parallele Platte/Platte
   Masterkurve: Dehnungs-/Kompressionsmodus
      gemessene Frequenzen : 1 ; 2 ; 4 ; 8 ; 16 ; 31.5 ; 63 ; 125 Hz,
      Formfaktor: < 0,9
      vorgegebene Amplitude: 10 µm
      dynamische Verformung: 0,0005
Ermittlung der Glastemperatur:
   1) Über das Zeit-Temperatur-Superpositionsprinzip wird eine Masterkurve erstellt (nach DIN EN ISO 6721)
   2) Die Tg (Glastemperatur) ist diejenige Referenztemperatur, bei der der tan delta bei einer gewünschten Frequenz maximal ist. Die gewählte Frequenz beträgt für alle Bestimmungen der Tg jeweils 101 Hz

Bei der Beschreibung der erfindungsgemäßen Zusammensetzung bedeuten Mengenangaben in %, wenn nicht explizit anders angegeben, Gew.-% bezogen auf die gesamte Zusammensetzung.

Vorzugsweise beträgt die Menge an Copolymer a), bezogen auf die gesamte Zusammensetzung, mindestens 10 Gew.-% und insbesondere mindestens 15 Gew.-%. Die Obergrenze liegt aufgrund der bevorzugten Anwesenheit der nachstehend beschriebenen weiteren Komponenten vorzugsweise bei 60 Gew.- % und insbesondere bei 45 Gew.-%. Der Bereich zwischen 15 und 45 Gew.-% ist also besonders bevorzugt.

Wegen der besonders ausgeprägten akustischen Dämpfungseigenschaften im Sinne einer dissipativen Schwingungsdämpfung, also der Umwandlung von mechanischer Schwingungsenergie in Wärme, ist es bevorzugt, dass das Co-Polymer a) ein Block-Copolymer aus Styrol und einem Dien darstellt. Das Dien wird vorzugsweise ausgewählt aus Butadien, Isopren oder Mischungen hiervon. Dabei wird eine ausgeprägte dissipative Schwingungsdämpfung dann erzielt, wenn das Block-Copolymer a) einen Styrol-Anteil, bezogen auf das gesamte Block-Copolymer, von mindestens 10, vorzugsweise von mindestens 15 Gew.-%, und von höchstens 60 Gew.-%, vorzugsweise von höchstens 50 Gew.-% aufweist.

Die Dien-Komponente kann unsubstituiert sein. Sie kann aber auch Substituenten aufweisen, insbesondere ausgewählt aus Carboxyl-, Hxdroxyl- und Aminogruppen. Hierdurch lässt sich die Haftung der Zusammensetzung auf einem metallischen Substrat verbessern.

Das Copolymer a) soll einerseits bei Raumtemperatur (22 °C) flüssig oder pastös sein, andererseits aber eine Glastemperatur aufweisen, die nicht weit unterhalb von Raumtemperatur liegt. Neben dem strukturellen Aufbau des Copolymers ist hierfür auch die Molmasse des Copolymers von Bedeutung. Die erwünschte Kombination von Eigenschaften stellt sich insbesondere dann ein, wenn das Copolymer a) eine gewichtsmittlere Molmasse von mindestens 1000, vorzugsweise von mindestens 2000 und insbesondere von mindestens 5000, und von höchstens 50000, vorzugsweise von höchstens 35000, insbesondere von höchstens 25000 aufweist. Der Bereich von 5000 bis 18000 ist dabei besonders bevorzugt. Als mittlere Molmasse von Polymeren wird im Rahmen dieser Schrift generell die gewichtsmittlere Molmasse verstanden.

Bei der Polymerisation von Dienen über die olefinische Doppelbindungen bildet sich innerhalb jedes Monomers eine neue olefinische Doppelbindung aus, die innerhalb der Polymerkette auf verschiedene Weise angeordnet sein kann. Im Rahmen der vorliegenden Erfindung ist es aufgrund der günstigen Kombination von chemischen Eigenschaften (Vulkanisierbarkeit) und akustischem Dämpfungsverhalten erforderlich dass das Copolymer a) einen durch die Polymerisation der Diene gebildeten ungesättigten Dien-Block enthält und dass die C = C - Doppelbindungen im Dien-Block so angeordnet sind, dass der Vinyl-Anteil im Dienblock mindestens 20 mol%, vorzugsweise mindestens 40 mol%, und höchstens 98 mol%, vorzugsweise höchstens 80 mol% (bezogen auf die Gesamtheit der olefinischen Doppelbindungen) beträgt

Das Vulkanisationssystem kann aus den für die Vulkanisation von Kautschuk bekannten Vulkanisationssystemen ausgewählt werden. So kann es gemäß der Alternative
b1) Schwefel und einen oder mehrere Beschleuniger enthalten.

Der pulverförmige Schwefel wird dabei bevorzugt in Mengen von 0,5 bis 6,5 Gew.%, bezogen auf die Gesamtzusammensetzung eingesetzt. Besonders bevorzugt werden Mengen zwischen 1 und 4 Gew.% eingesetzt. Als organische Beschleuniger eignen sich Dithiocarbamate (in Form ihrer Ammonium- bzw. Metallsalze), Xanthogenate, Thiuram-Verbindungen (Monosulfide und Disulfide), Thiazolverbindungen, Aldehyd/Aminbeschleuniger (z.B. Hexamethylentetramin) sowie Guanidinbeschleuniger. Ganz besonders bevorzugt werden Dibenzothiazyldisulfid (MBTS), 2-Mercaptobenzthiazol (MBT), dessen Zinksalz (ZMBT), Zinkdibenzyldithiocarbamat (ZBEC), N-Cyclohexylbenzodithiazylsulfenamid (CBS) oder Diphenylguanidin. Die Beschleuniger, inklusive der vorstehend und im folgenden Absatz genannten weiteren Zinkverbindungen, werden vorzugsweise in Mengen zwischen 0,25 und 20 Gew.%, besonders bevorzugt zwischen 0,8 und 12 Gew.%, verwendet. Für die Erzielung besonders hoher Temperatur- und Reversionsfestigkeit des Klebstoffes kann das Vulkanisationsgemisch auch bifunktionelle Vernetzer enthalten. Konkrete Beispiele sind Vernetzer auf Basis von bifunktionellen Dithiocarbamaten wie z.B. das 1,6-bis(N,N-dibenzylthiocarbamoyldithio)-hexan. Derartige Vernetzer können in Mengen zwischen 0 und 2, vorzugsweise zwischen 0 und 1 Gew.% in den Zusammensetzungen enthalten sein.

Bei den als Beschleuniger wirkenden Zinkverbindungen kann zwischen den Zinksalzen von Fettsäuren, Zinkdithiöcarbamaten, basischen Zinkcarbonaten sowie insbesondere feinteiligem Zinkoxid gewählt werden. Der Gehalt an Zinkverbindungen liegt im Bereich zwischen 0,5 und 10 Gew.%, vorzugsweise zwischen 2 und 8 Gew.%. Diese Zinkverbindungen können in Kombination mit den im vorstehenden Absatz genannten Beschleunigern eingesetzt werden und werden dies vorzugsweise auch. Zusätzlich können weitere typische Kautschuk-Vulkanisationshilfsmittel wie Fettsäuren (z.B. Stearinsäure) in der Formulierung vorhanden sein.

Das Vulkanisationssystem kann aber auch frei von elementarem Schwefel sein. Beispielsweise können als Vulkanisationssystem
b2) Peroxide, vorzugsweise organische Peroxide eingesetzt werden, wie sie für diesen Zweck bekannt sind. Beispile sind: Dibenzoylperoxid, tert.-Butylperoxybenzoat, und insbesondere 1,1-Di-(tert.-butylperoxy)-3,3,5-trimethylcyclohexan, Butyl-4,4-di-(tert.-butylperoxy)valerat, Dicumyl peroxide, Di-(2-tert.-butyl-peroxyisopropyl)-benzen, tert.-Butylcumylperoxid, 2,5-Dimethyl-2,5-di-(tert.-butylperoxy)-hexan, Di-tert.-butylperoxid, 2,5-Dimethyl-2,5-di(tert.-butylperoxy)hexyn-3 und Vernetzungshilfsmittel wie Triallylisocyanurat

Anstelle von Peroxiden können auch "disulfidische" Vuklanisationssysteme, also Vulkanisationssysteme auf Basis von Disulfiden eingesetzt werden. Geeignet sind beispielsweise Thiuramdisulfide.

Die Einsatzmengen betragen vorzugsweise:
0,3 - 4,5 Gew.% im Falle von Peroxiden,
0,2 - 5 Gew.% im Falle von Disulfiden

Als weitere Alternative können als Vulkanisationssystem
b3) Chinone, Chinondioxime, insbesondere p-Benzochinondioxim, Nitrosobenzol oder Dinitrosobenzol, insbesondere p-Dinitrosobenzol.
   verwendet werden. Auch diese sind aus der Vulkanisation von Kautschuk bekannt.

Erfindungsgemäß kann auch ein kombiniertes Vulkanisationssystem aus elementarem Schwefel, den oben genannten organischen Beschleunigern und Chinondioximen eingesetzt werden. Beispielhaft erwähnt sei p-Benzochinondioxim. Es können jedoch auch andere Chinondioxime in Kombination mit den vorgenannten Schwefelsystemen verwendet werden. Das Vulkanisationssystem kann auch nur aus Chinondioximen bestehen. Die Einsatzmenge beträgt vorzugsweise 1,5 - 6,0 Gew.%, insbesondere für Chinondioxime, unabhängig davon, ob diese zusammen mit Schwefel eingesetzt werden oder nicht.

In einer bevorzugten Ausführungsform enthält die Zusammensetzung zusätzlich, bezogen auf die gesamte Zusammensetzung
c) 10 bis 45 Gew.-%, vorzugsweise 15 bis 40 Gew.-% und insbesondere 25 bis 36 Gew.-% Füllstoff.

Die Füllstoffe können aus einer Vielzahl von Materialien ausgewählt werden. Insbesondere sind hier zu nennen: Kreiden, natürliche oder gemahlene Calciumcarbonate, Calcium-Magnesiumcarbonate, Kieselsäure (englisch: "silica"), Silikate, Talkum, Schwerspat sowie Ruß. Es kann zweckmäßig sein, dass zumindest ein Teil der Füllstoffe oberflächenvorbehandelt ist. Insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Als Füllstoffe haben sich insbesondere Füllstoffe mit einem großen Aspektverhältnis (= blättchenförmige Füllstoffe mit im Vergleich zur Ausdehnung in der Blättchenebene geringer Dicke: Die Dicke senkrecht zur Blättchenebene ist maximal 1/10 der kleinsten Ausdehnung in der Blättchenebene) wie insbesondere Schichtsilicate, besonders bevorzugt Glimmer, Talkum und Graphit als günstig für gute akustische Dämpfungseigenschaften erwiesen.

Die erfindungsgemäßen Zusammensetzungen können noch zusätzlich zu diesen Füllstoffen zum Binden von Feuchtigkeit zwischen 0 und 8 Gew.%, vorzugsweise zwischen 1 und 6 Gew.% an Calciumoxid enthalten.

Vorzugsweise wird die erfindungsgemäße Zusammensetzung so eingestellt, dass sie bei oder vor dem thermischen Härten irreversibel expandiert ("aufschäumt", "aufbläht"). Hierdurch tritt eine irreversible Volumenvergrößerung ein, die es ermöglicht, Hohl- oder Zwischenräume besser vollständig mit der ausgehärteten Masse auszufüllen. Zu diesem Zweck ist es bevorzugt, dass die Zusammensetzung so genannte Treibmittel (Komponente d) enthält.

Als Treibmittel eignen sich im Prinzip alle bekannten Treibmittel wie z. B. die "chemischen Treibmittel" die durch Zersetzung Gase freisetzen, oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden die expandierbaren Kunststoffmikrohohlkugeln auf der Basis von Polyvinylidenchloridcopolymeren oder Acrylnitril/(Meth)acrylat-Copolymeren. Diese sind z.B. unter dem Namen "Dualite®" bzw. "Expancel®" von den Firmen Pierce & Stevens bzw. Casco Nobel im Handel erhältlich.

Die Menge an Treibmittel wählt man vorzugsweise so, dass sich das Volumen der Masse beim Erwärmen auf Aktivierungstemperatur (oder Expansionstemperatur) um mindestens 10 %, vorzugsweise mindestens 50 % und insbesondere mindestens 100 % irreversibel vergrößert. Hierunter ist zu verstehen, dass die Masse zusätzlich zur normalen und reversiblen thermischen Ausdehnung gemäß ihrem thermischen Ausdehnungskoeffizienten ihr Volumen im Vergleich zum Ausgangsvolumen bei Raumtemperatur (22 °C) beim Erwärmen auf die Aktivierungstemperatur irreversibel derart vergrößert, dass es nach dem Wiederabkühlen auf Raumtemperatur um mindestens 10 %, vorzugsweise um mindestens 50 % und insbesondere mindestens 100 % größer ist als zuvor. Der angegebene Expansionsgrad bezieht sich also auf das Volumen der Masse bei Raumtemperatur vor und nach dem vorübergehenden Erhitzen auf die Aktivierungstemperatur. Die Obergrenze des Expansionsgrads, also der irreversiblen Volumenvergrößerung, kann man durch die Wahl der Menge des Treibmittels so einstellen, dass sie bei 600 %, insbesondere bei 300 % liegt. Ein Schäumgrad im Bereich von 100 bis 300 % ist also bevorzugt. Der Schäumgrad kann durch Volumenvergleich (ohne räumliche Eingrenzung beim Schäumen, d.h. das Schäumen erfolgt dreidimensional) oder durch Vergleich der Dichten vor- und nach dem Schäumen bestimmt werden. Zumindest eine dieser Methoden soll einen Wert im vorstehend genannten Bereich ergeben.

Die hierfür erforderliche Menge an Treibmittel kommt auf die genaue Art des Treibmittels an und kann empirisch oder aufgrund von Herstellerempfehlungen eingestellt werden. Als Anhaltspunkt kann gelten, dass für den hier vorgesehenen Anwendungszweck die erfindungsgemäße Zusammensetzung, bezogen auf die gesamte Zusammensetzung,
bis zu 6 Gew.-%, vorzugsweise bis zu 4 Gew.-%, und vorzugsweise mindestens 0,2 Gew.-% Treibmittel enthält

In einer weiteren bevorzugten Ausführungsform enthält die Zusammensetzung zusätzlich, bezogen auf die gesamte Zusammensetzung,
e) bis zu 12 Gew.-%, vorzugsweise bis zu 9 Gew.-% und insbesondere bis zu 5 Gew.-%, und vorzugsweise mindestens 1 Gew.-% Festkautschuk und/oder thermoplastische Polymere
   und /oder f) bis zu 25 Gew.-%, vorzugsweise bis zu 12 Gew.-%, und vorzugsweise mindestens 1 Gew.-%, insbesondere mindestens 2,5 Gew.-% Polydien (vorzugsweise Polybutadien) mit einer Molmasse im Bereich von 1000 bis 10000, das Carboxyl-, Hydroxyl- oder Amingruppen aufweist. Vorzugsweise sind beide dieser Komponenten e) und f) gleichzeitig vorhanden. Beide Komponenten verbessern die Zähigkeit der ausgehärteten Zusammensetzung, wobei die Komponenten f) aufgrund der Carboxylgruppen zusätzlich die Haftung auf metallischen Substraten verbessert.

Als Komponente e) sind insbesondere Festkautschuke auf Basis von Polybutadien, vorzugsweise mit einem sehr hohen Anteil an cis-1,4-Doppelbindungen (typischerweise über 85%), Styrol-Butadien-Kautschuk (Styrol-Butadien-Styrol Copolymere, SBS), Butadien-Acrylnitril-Kautschuk, Styrol-Isopren-Kautschuke (Styrol-Isopren-Styrol Copolymere, SIS), Styrol-Ethylen/Propylen-Styrol Copolymere, SEPS, Styrol-Ethylen/Ethylen/Propylen-Styrol Copolymere, SEEPS, synthetischer oder natürlicher Isoprenkautschuk, Polycyclooctenamer, Butylkautschuk oder Polyurethankautschuk geeignet.

Die akustischen Dämpfungseigenschaften der erfindungsgemäßen Zusammensetzung werden verbessert, wenn diese zusätzlich, bezogen auf die gesamte Zusammensetzung,
g) bis zu 40 Gew.-%, vorzugsweise bis zu 30 Gew.-% und insbesondere bis zu 25 Gew.-%, und vorzugsweise mindestens 2 Gew.-%, insbesondere mindestens 5 Gew.-% Kohlenwasserstoffharz enthält.

Das Kohlenwasserstoffharz trägt dazu bei, die Glastemperatur der ausgehärteten Masse in den gewünschten Bereich von etwa -5 °C bis etwa +40 °C zu bringen. Dann ist die akustische Dämpfung bei den üblichen Umgebungstemperaturen besonders ausgeprägt. Die Harze können völlig aliphatisch sein oder sie können aliphatische und aromatische Strukturen aufweisen bzw. können es aromatisch modifizierte aliphatische Harze sein. Hiefür können Handelsprodukte wie beispielsweise Escorez™ 1102, Escorez™ 2173, Escorez™ 2184, Escorez™2101, Escorez™ 2105 und Nevtac™ 10 eingesetzt werden.

Harze mit einem Erweichungspunkt > 10 °C, vorzugsweise mit einem Erweichungspunkt > 40 °C und insbesondere mit einem Erweichungspunkt > 70 °C, die mit der Polymermatrix verträglich sind, tragen zur Verschiebung der Glastemperatur in den gewünschten Bereich von etwa -5 bis etwa + 40 °C bei und erhöhen das Maximum des tan delta.

Zur besseren Verarbeitbarkeit der nicht ausgehärteten Zusammensetzung und zur Verbesserung der mechanischen Eigenschaften der ausgehärteten Zusammensetzung ist es bevorzugt, dass die nicht ausgehärtete Zusammensetzung zusätzlich
h) bis zu 40 Gew.-%, vorzugsweise bis zu 30 Gew.-% und insbesondere bis zu 25 Gew.-%, und vorzugsweise mindestens 2 Gew.-%, insbesondere mindestens 5 Gew.-% Weichmacher enthält.

Hierfür kommen beispielsweise die als Weichmacher bekannten Phthalsäureester, Kohlenwasserstoff-Öle wie beispielsweise Weißöl, bei 22 °C flüssiges natives Öl (Fettsäure-Glycerin-Ester wie beispielsweise die so genannten Triglyceride, z.B. Rapsöl, Sojaöl, Walnussöl, Leinöl, Sonnenblumenöl, Olivenöl, etc.) in Betracht.

Insbesondere das gleichzeitige Vorhandensein der Komponenten g) und h) in der Zusammensetzung verbessern die akustischen Dämpfungseigenschaften, d.h. erhöhen das Maximum des Verlustfaktors Tangens delta im gewünschten Bereich von etwa -5 bis etwa + 40 °C und verbreitern den Peak des Tangens delta.

Die erfindungsgemäßen Zusammensetzungen können weiterhin strukturverstärkende Faserfüllstoffe enthalten, vorzugsweise auf der Basis von Aramidfasern, Kohlenstoff-Fasern, Glasfasern, Polyamidfasern, Polyethylenfasern oder Polyesterfasern, wobei diese Fasern vorzugsweise Kurzfasern in Form von Pulpfasern oder Stapelfasern sind. Die Fasern sollen dabei besonders bevorzugt eine mittlere Faserlänge zwischen 100 µm und 250 µm haben und einen Durchmesser von 5 bis 20 µm. Die längsten Fasern sollen dabei 1000 µm bis 2000 µm nicht überschreiten. Besonders bevorzugt sind hierbei Glasfasern, Polyamidfasern vom Typ der Aramidfaser oder auch Polyesterfasern. Der Gehalt der Zusammensetzung an Fasern, soweit vorhanden, beträgt vorzugsweise 0,5 bis 10 Gew.%.

Es ist bevorzugt, dass die Zusammensetzung neben den in Anspruch 1 genannten essentiellen Komponenten mindestens eine der Komponenten c) bis h) zusätzlich enthält, so dass die Zusammensetzung mindestens einer der Kombinationen: a) + b) + c), a) + b) + d), a) + b) + e), a) + b) + f), a) + b) + g), a) + b) + h) entspricht. Besonders bevorzugt enthält die erfindungsgemäße Zusammensetzung sämtliche der vorstehend genannten Komponenten a) bis h) in den angegebenen Mengen gleichzeitig, wobei als Vulkanisationssystem allerdings nur eines der genannten Systeme b1), b2) oder b3) anwesend sein muss.

Die folgende Tabelle gibt einen Überblick über mögliche erfindungsgemäße Zusammensetzungen:

| Komponente | allgemeine Zusammensetzung | bevorzugte Zusammensetzung | besonders bevorzugte Zusammensetzung |
|---|---|---|---|
| Festkautschuk | 0 - 12 % | 0 - 9 % | 1,5 - 5,0 % |
| Akustisch dämpfendes Block-Copolymer | 5 - 65 % | 10 - 50 % | 15 - 45 % |
| Polybutadien mit aktiven Carboxylgruppen (MW = 1000 - 10.000 | 0 - 25 % | 1 - 12 % | 2,5 - 9 % |
| g/mol) | | | |
| Weichmacher | 0 - 40 % | 2 - 30 % | 5 - 25 % |
| Kohlenwasserstoffharz | 0 - 40 % | 2 - 30 % | 5 - 25 % |
| Schwefel | 0,5 - 6,5 % | 0,8 - 4,0 % | 1,0 - 3,0 % |
| Vulkanisationsbeschleuniger (MBTS, MBT, ZMBT, ZBEC, CBS, etc.) | 0,25 - 7,5 % | 0,5 - 5% | 0,8 - 4 % |
| chemisches Treibmittel (inkl . Aktivator) | 0 - 6 % | 0,2 - 4 % | 0,5 - 3 % |
| physikalisches Treibmittel | 0 - 6 % | 0 - 4 % | 0 - 1,5 % |
| Zinkoxid | 0 - 10 % | 0 - 8 % | 0,5 - 7 % |
| Dinatriumsalz des Hexamethylen-1,6-bis(thisosulfat) | 0 - 2,5 % | 0,1 - 1,8 % | 0,4 - 1,3 % |
| Antioxidans (z.B. 2,2-Methylen-bis-(4-methyl-6-tert.-butylphenol)) | 0 - 1,5 % | 0,1 - 1,0 % | 0,2 - 0,7 % |
| Calciumoxid | 0 - 8 % | 1 - 6 % | 2,5 - 5,5 % |
| Russ | 0 - 5 % | 0,1 - 3 % | 0,3 - 2 % |
| Füllstoff (Calciumcarbonat, Graphit, Talkum, Glimmer, etc.) | 10 - 45 % | 15 - 40 % | 25 - 36 % |
| Calciumcarbonat, gecoatet | 0 - 30 % | 0 - 18 % | 0 - 12 % |
| | | | |
| Daneben können Fasern, weitere bzw. andere typische Beschleuniger, andere Vernetzungsmittel wie Peroxide oder Benzochinondioxim, andere Antioxidantien, Co-Aktivatoren und weitere Katalysatoren, Treibmittel, Öle, Harze, Alterungsschutzmittel, Rheologiehilfsmittel, Haftungsvermittler, Pigmente und thermoplastische Polymere (SEPS, SEEPS, PE, PP, PVC, TPU) enthalten sein. | | | |

Der Vorteil der erfindungsgemäßen Zusammensetzung liegt darin, dass sie bei einem entsprechend gewähltem Verhältnis von bei 22 °C flüssigen und festen Komponenten so eingestellt werden kann, dass sie automatisch (z.B. mit Robotern) oder manuell mit Standardapplikationsanlagen für Kleb- und Dichtstoffe in der Automobilindustrie bei einer Temperatur von maximal 60 °C appliziert werden kann. Hierfür ist ausschlaggebend, dass die olefinische Doppelbindungen enthaltenden Copolymere a) bei 22 °C flüssig bzw. pastös sind. Die erfindungsgemäße Zusammensetzung ist also vorzugsweise dadurch gekennzeichnet, dass sie bei einer Temperatur im Bereich von 15 bis 60 °C eine solche Viskosität aufweist, dass sie mit einer Pumpe (z. B. einer Kreisel-, Zahnrad-, oder Schöpfkolbenpumpe, wie sie in den genannten Standardapplikationsgeräten üblich sind) pumpbar ist.

Ein weiterer Aspekt der vorliegenden Erfindung liegt in der Applikation der erfindungsgemäßen Zusammensetzung. Daher umfasst die Erfindung auch ein Verfahren zur Applikation der erfindungsgemäßen Zusammensetzung, dadurch gekennzeichnet, dass man die Zusammensetzung bei einer Temperatur im Bereich von 15 bis 60 °C mit einer Pumpe (Pumpenbeispiele wie vorstehend) zum Applikationsort fördert und im flüssigen oder pastösen Zustand auf ein beöltes, unbehandeltes oder gereinigtes Substrat aufträgt.

Die erfindungsgemäße Zusammensetzung kann nach der Applikation thermisch gehärtet werden, wozu die in dem betroffenen Industriesegment des Fahrzeug- oder Gerätebaus üblicherweise vorhandenen Öfen zum Einbrennen der Lackierung verwendet werden können. Die Aktivierungstemperatur für die thermische Härtung und gegebenenfalls das Aufschäumen liegt vorzugsweise im Bereich von 120 bis 220 °C. Diese Temperatur soll vorzugsweise für eine Zeitdauer im Bereich von 10 bis 150 Minuten aufrecht gehalten werden.

Nach Aushärten der Masse liegt die mit einer DMA-Methode (siehe weiter oben) gemessene Glastemperatur der ausgehärteten Masse vorzugsweise im Bereich von - 5 °C bis + 40 °C. Dann ist die akustische Dämpfung bei den üblichen Umgebungstemperaturen besonders ausgeprägt. Der mit einer DMA-Methode gemessene maximale Verlustfaktor tan δ (Einzelheiten zur Messung: Siehe experimenteller Teil) im Frequenzbereich 0 bis 500 Hz bei einer Temperatur im Bereich von -5 °C bis +40 °C beträgt mindestens 0,50, vorzugsweise mindestens 0,9, insbesondere mindestens 1,1, was das gute akustische Dämpfungsverhalten zum Ausdruck bringt. "Bei einer Temperatur im Bereich von -5 °C bis +40 °C" bedeutet, dass der genannte Mindestwert für tan δ bei irgendeiner Temperatur im genannten Bereich erreicht wird.
Der Speichermodul E' der ausgehärteten Masse liegt im Bereich 0,1 und - 10000 MPa bei einem Verlustfaktor tan delta von mindestens 0,50, vorzugsweise mindestens 0,9 und insbesondere mindestens 1,1 und der Speichermodul G' im Bereich 0,1 und - 10000 MPa bei einer Frequenz von 0 bis 500 Hz.

Weiterhin zeichnet sich die erfindungsgemäße Zusammensetzung nach Härtung durch gute Beschichtungseigenschaften (keine Einzüge an Bauteilen) sowie durch eine ausreichende Härte aus: Shore A < 30 Skalenteile.

Die Härtemessung nach Shore für Elastomere ist festgelegt in der Norm DIN 53505. Bei der Shore A Messung dient die Eindringtiefe einer Nadel mit abgestumpfter Spitze in das zu prüfende Material als ein Maß für die entsprechende Shore-Härte, die auf einer Skala von 0 Shore bis 100 Shore (0 Millimeter Eindringtiefe) gemessen wird. Die Haltezeit beträgt 3 Sekunden.

Anwendung finden die Zusammensetzungen insbesondere als Unterfütterung sowie als Kleb- und Dichtstoff für Anbauteile wie Türen, Front- und Heckklappe, Dach-, Front- und Bodenbereich, aber auch direkt in der Fahrgastzelle für Fahrzeuge (Automobile, LKW, Bus) oder für die Fertigung von Schienenfahrzeugen. Sie können auch im Gerätebau verwendet werden, wenn akustische Schwingungen gedämpft werden sollen, die beispielsweise von Motoren, Getrieben oder Pumpen (allgemein: von Schwingungsgebern durch sich drehende Maschinen) ausgehen können. Daher umfasst die vorliegende Erfindung auch die Verwendung einer erfindungsgemäßen Zusammensetzung als akustisch dämpfendes Material im Fahrzeug- oder Gerätebau.

### Beispiele

Die nachstehenden Tabellen enthalten Vergleichsbeispiele und Beispiele erfindungsgemäßer Zusammensetzungen, Daten über die Härtung und das Aufschäumverhalten, sowie über die akustischen Dämpfungseigenschaften, ausgedrückt im Verlustfaktor tan δ. Die Messmethode ist eine DMA Methode in Anlehnung an DIN EN ISO 6721, wie sie weiter oben beschrieben wurde.

Expansionsraten wurden offen, also ohne geometrische Beschränkung der Probe, durch Vergleich der Volumina der Probe vor und nach dem Schäumen und Härten (bei der jeweils in den Tabellen angegebenen Temperatur) bestimmt.

### Vergleichsbeispiele

### Vergleichsbeispiel 1:

| | |
|---|---|
| Rapsöl | 8,7% |
| Polystyrol-Polyisopren Blockcopolymer, Tg -63 °C, Styrolgehalt 17 %, Mw: 31.000 g/mol | 30,7% |
| Polybutadien cis-1,4- (fest) | 5,2% |
| Polybutadien mit aktiven Carboxylgruppen (MW = 2100 g/mol) | 2,8% |
| Graphit | 32,7% |
| 2,2-Methylen-bis-(4-methyl-6-tert.-butylphenol) | 0,4% |
| Russ | 1,8% |
| Kieselsäure | 1,0% |
| Calciumoxid | 3,0% |
| expandierfähige Mikrohohlkugeln | 2,1% |
| Azodicarbonamid | 1,9% |
| Oxi-bis-sulfo-hydrazid | 1,9% |
| Benzolsulfinsaeure-zinksalz | 0,10% |
| Benzochinondioxim | 2,1% |
| ZBEC | 2,9% |
| Schwefel | 2,0% |
| MBTS | 0,7% |
| Tg Produkt | < -15 °C |
| tan delta @ 20 °C | 0,15 |
| max. tan delta | 0,41 |
| Shore A | 19 |
| Expansion (30 min @180 °C) | 250 % |

### Vergleichsbeispiel 2:

| | |
|---|---|
| Rapsöl | 8,7% |
| Polyisopren, Tg -63 °C, Mw: 29.000 g/mol | 30,7% |
| Polybutadien cis-1,4- (fest) | 5,2% |
| Polybutadien mit aktiven Carboxylgruppen (MW = 2100 g/mol) | 2,8% |
| Graphit | 32,7% |
| 2,2-Methylen-bis-(4-methyl-6-tert.-butylphenol) | 0,4% |
| Russ | 1,8% |
| Kieselsäure | 1,0% |
| Calciumoxid | 3,0% |
| expandierfähige Mikrohohlkugeln | 2,1% |
| Azodicarbonamid | 1,9% |
| Oxi-bis-sulfo-hydrazid | 1,9% |
| Benzolsulfinsaeure-zinksalz | 0,10% |
| Benzochinondioxim | 2,1% |
| ZBEC | 2,9% |
| Schwefel | 2,0% |
| MBTS | 0,7% |
| Tg Produkt | < -15 °C |
| tan delta @ 20 °C | 0,15 |
| max. tan delta | 0,27 |
| Shore A | 19 |
| Expansion (30 min @180 °C) | 195% |

### Vergleichsbeispiel 3:

| | |
|---|---|
| Rapsöl | 8,7% |
| Polyisopren, Tg -25 °C, Mw: 25.000 g/mol | 30,7% |
| Polybutadien cis-1,4- (fest) | 5,2% |
| Polybutadien mit aktiven Carboxylgruppen (MW = 2100 q/mol) | 2,8% |
| Graphit | 32,7% |
| 2,2-Methylen-bis-(4-methyl-6-tert.-butylphenol) | 0,4% |
| Russ | 1,8% |
| Kieselsäure | 1,0% |
| Calciumoxid | 3,0% |
| expandierfähige Mikrohohlkugeln | 2,1% |
| Azodicarbonamid | 1,9% |
| Oxi-bis-sulfo-hydrazid | 1,9% |
| Benzolsulfinsaeure-zinksalz | 0,10% |
| Benzochinondioxim | 2,1% |
| ZBEC | 2,9% |
| Schwefel | 2,0% |
| MBTS | 0,7% |
| Tg Produkt | -15 °C |
| tan delta @ 20 °C | 0,21 |
| max. tan delta | 0,55 |
| Shore A | 45 |
| Expansion (30 min @180 °C) | 163% |

### Vergleichsbeispiel 4:

| | |
|---|---|
| flüssiges Polybutadien (MW = 1000 g(mol) | 2,0% |
| Polybutadien cis-1,4- (fest) | 7,8% |
| Polybutadien mit aktiven Carboxylgruppen (MW = 2100 g/mol) | 4,0% |
| Polybutadien mit aktiven Carboxylgruppen (MW = 1300 q/mol) | 1,5% |
| flüssiges Polybutadien (MW = 2200 g/mol) | 23,5% |
| Kreide | 31,8% |
| gecoatete Kreide | 17,3% |
| 2,2-Methylen-bis-(4-methyl-6-tert.-butylphenol) | 0,5% |
| Russ | 0,5% |
| Zinkoxid | 3,0% |
| Calciumoxid | 2,5% |
| expandierfähige Mikrohohlkugeln | 0,5% |
| Azodicarbonamid | 1,5% |
| Benzolsulfinsaeure-zinksalz | 0,1% |
| Schwefel | 2,5% |
| MBTS | 1,0% |
| Tg Produkt | -10 °C |
| tan delta @ 20 °C | 0,11 |
| max. tan delta | 0,16 |
| Shore A | 50 |
| Expansion (30 min @180 °C) | 140% |

### Erfindungsgemäße Zusammensetzungen:

### Beispiel 1:

| | |
|---|---|
| Rapsöl | 8,7% |
| Polystyrol-Polybutadien-Block-Copolymer, Tg -14 °C, Styrolgehalt 22 %, Vinylanteil 65 mol%, Mw 8400 g/mol | 30,8% |
| Polybutadien cis-1,4- (fest) | 5,2% |
| Polybutadien mit aktiven Carboxylgruppen (MW = 2100 g/mol) | 2,8% |
| Graphit | 32,8% |
| 2,2-Methylen-bis-(4-methyl-6-tert.-butylphenol) | 0,4% |
| Russ | 1,7% |
| Kieselsäure | 1,0% |
| Calciumoxid | 3,0% |
| expandierfähige Mikrohohlkugeln | 2,0% |
| Azodicarbonamid | 1,9% |
| Oxi-bis-sulfo-hydrazid | 1,9% |
| Benzolsulfinsaeure-zinksalz | 0,10% |
| Benzochinondioxim | 2,1% |
| ZBEC | 3,9% |
| Schwefel | 2,0% |
| MBTS | 0,7% |
| Tq Produkt | 0 °C |
| tan delta @ 20 °C | 0,57 |
| max. tan delta | 0,68 |
| Shore A | 15 |
| Expansion (30 min @180 °C) | 553% |

### Beispiel 2:

| | |
|---|---|
| Rapsöl | 8,7% |
| Polystyrol-Polybutadien-Block-Copolymer, Tg -14 °C, Styrolgehalt 22 %, Vinylanteil 65 mol%, Mw 8400 g/mol | 30,8% |
| Polybutadien cis-1,4- (fest) | 5,2% |
| Polybutadien mit aktiven Carboxylgruppen (MW = 2100 g/mol) | 2,8% |
| Graphit | 32,8% |
| 2,2-Methylen-bis-(4-methyl-6-tert.-butylphenol) | 0,4% |
| Russ | 1,7% |
| Kieselsäure | 1,0% |
| Calciumoxid | 3,0% |
| expandierfähige Mikrohohlkugeln | 0,9% |
| Azodicarbonamid | 1,0% |
| Oxi-bis-sulfo-hydrazid | 2,9% |
| Benzolsulfinsaeure-zinksalz | 0,10% |
| Benzochinondioxim | 2,1% |
| ZBEC | 3,9% |
| Schwefel | 2,0% |
| MBTS | 0,7% |
| Tg Produkt | 0 °C |
| tan delta @ 20 °C | 0,60 |
| max. tan delta | 0,75 |
| Shore A | 20 |
| Expansion (30 min @180 °C) | 284 % |

### Beispiel 3:

| | |
|---|---|
| Rapsöl | 8,9% |
| Polystyrol-Polybutadien-Block-Copolymer, Tg -14 °C, Styrolgehalt 22 %, Vinylanteil 65 mol%, Mw 8400 g/mol | 41,8% |
| Polybutadien cis-1,4- (fest) | 5,4% |
| Polybutadien mit aktiven Carboxylgruppen (MW = 2100 g/mol) | 2,9% |
| Graphit | 23,9% |
| 2,2-Methylen-bis-(4-methyl-6-tert.-butylphenol) | 0,4% |
| Russ | 1,8% |
| Kieselsäure | 1,0% |
| Calciumoxid | 3,1% |
| expandierfähige Mikrohohlkugeln | 0,9% |
| Azodicarbonamid | 1,0% |
| Oxi-bis-sulfo-hydrazid | 0,8% |
| Benzolsulfinsaeure-zinksalz | 0,1% |
| Benzochinondioxim | 2,2% |
| ZBEC | 3,0% |
| Schwefel | 2,1% |
| MBTS | 0,7% |
| Tg Produkt | 4,5 °C |
| tan delta @ 20 °C | 0,93 |
| max. tan delta | 0,96 |
| Shore A | 23 |
| Expansion (30 min @180 °C) | 195% |

### Beispiel 4:

| | |
|---|---|
| Rapsöl | 8,9% |
| Polystyrol-Polybutadien-Block-Copolymer, Tg -14 °C, Styrolgehalt 22 %, Vinylanteil 65 mol%, Mw 85400 g/mol | 31,8% |
| Polybutadien cis-1,4- (fest) | 5,4% |
| Polybutadien mit aktiven Carboxylgruppen (MW = 2100 g/mol) | 2,9% |
| Muskovit Glimmer | 33,9% |
| 2,2-Methylen-bis-(4-methyl-6-tert.-butylphenol) | 0,4% |
| Russ | 1,8% |
| Kieselsäure | 1,0% |
| Calciumoxid | 3,1% |
| expandierfähige Mikrohohlkugeln | 0,9% |
| Azodicarbonamid | 1,0% |
| Oxi-bis-sulfo-hydrazid | 0,9% |
| Benzolsulfinsaeure-zinksalz | 0,1% |
| Benzochinondioxim | 2,2% |
| ZBEC | 3,0% |
| Schwefel | 2,1% |
| MBTS | 0,7% |
| Tg Produkt | 4,5 °C |
| tan delta @ 20 °C | 0,99 |
| max. tan delta | 1,04 |
| Shore A | 23 |
| Expansion (30 min @180 °C) | 185% |

### Beispiel 5:

| | |
|---|---|
| Rapsöl | 8,9% |
| Polystyrol-Polybutadien-Block-Copolymer, Tg -7 °C, Styrolgehalt 40 %, vinyl-Gehalt 55 mol%, Mw 10300 g/mol | 41,8% |
| Polybutadien cis-1,4- (fest) | 5,4% |
| Polybutadien mit aktiven Carboxylgruppen (MW = 2100 g/mol) | 2,9% |
| Graphit | 23,9% |
| 2,2-Methylen-bis-(4-methyl-6-tert.-butylphenol) | 0,4% |
| Russ | 1,8% |
| Kieselsäure | 1,0% |
| Calciumoxid | 3,1% |
| expandierfähige Mikrohohlkugeln | 0,9% |
| Azodicarbonamid | 1,0% |
| Oxi-bis-sulfo-hydrazid | 0,9% |
| Benzolsulfinsaeure-zinksalz | 0,1% |
| Benzochinondioxim | 2,2% |
| ZBEC | 3,0% |
| Schwefel | 2,1% |
| MBTS | 0,7% |
| Tg Produkt | 10 °C |
| tan delta @ 20 °C | 0,94 |
| max. tan delta | 0,95 |
| Shore A | 16 |
| Expansion (30 min @180 °C) | 196% |
| Rapsöl | 8,9% |
| Polystyrol-Polybutadien-Block-Copolymer, Tg -7 °C, Styrolgehalt 40 %, vinyl-Gehalt 55 mol%, Mw 10300 g/mol | 41,8% |
| Polybutadien cis-1,4- (fest) | 5,4% |
| Polybutadien mit aktiven Carboxylgruppen (MW = 2100 g/mol) | 2,9% |
| Muskovit Glimmer | 23,9% |
| 2,2-Methylen-bis-(4-methyl-6-tert.-butylphenol) | 0,4% |
| Russ | 1,8% |
| Kieselsäure | 1,0% |
| Calciumoxid | 3,1% |
| expandierfähige Mikrohohlkugeln | 0,9% |
| Azodicarbonamid | 1,0% |
| Oxi-bis-sulfo-hydrazid | 0,9% |
| Benzolsulfinsaeure-zinksalz | 0,1% |
| Benzochinondioxim | 2,2% |
| ZBEC | 3,0% |
| Schwefel | 2,1% |
| MBTS | 0,7% |
| Tg Produkt | 12 °C |
| tan delta @ 20 °C | 1,25 |
| max. tan delta | 1,26 |
| Shore A | 14 |
| Expansion (30 min @180 °C) | 148 % |

### Beispiel 7:

| | |
|---|---|
| DINP | 8,9% |
| Polystyrol-Polybutadien-Block-Copolymer, Tg -7 °C, Styrolgehalt 40 %, vinyl-Gehalt 55 mol%, Mw 10300 q/mol | 41,8% |
| Polybutadien cis-1,4- (fest) | 5,4% |
| Polybutadien mit aktiven Carboxylgruppen (MW = 2100 g/mol) | 2,9% |
| Muskovit Glimmer | 24,7% |
| 2,2-Methylen-bis-(4-methyl-6-tert.-butylphenol) | 0,4% |
| Russ | 1,8% |
| Kieselsäure | 1,0% |
| Calciumoxid | 3,1% |
| Azodicarbonamid | 1,0% |
| Oxi-bis-sulfo-hydrazid | 0,9% |
| Benzolsulfinsaeure-zinksalz | 0,1% |
| Benzochinondioxim | 2,2% |
| ZBEC | 3,0% |
| Schwefel | 2,1% |
| MBTS | 0,7% |
| Tg Produkt | 14 °C |
| tan delta @ 20 °C | 1,26 |
| max. tan delta | 1,29 |
| Shore A | 15 |
| Expansion (30 min @180 °C) | 159 % |

### Beispiel 8:

| | |
|---|---|
| Rapsöl | 8,9% |
| Polystyrol-Polybutadien-Block-Copolymer, Tg -14 °C, Styrolgehalt 22 %, Vinylanteil 65 mol%, Mw 8400 g/mol | 41,8% |
| Polybutadien cis-1,4- (fest) | 5,4% |
| Polybutadien mit aktiven Carboxylgruppen (MW = 2100 g/mol) | 2,9% |
| Graphit | 25,8% |
| 2,2-Methylen-bis-(4-methyl-6-tert.-butylphenol) | 0,4% |
| Russ | 1,8% |
| Kieselsäure | 1,0% |
| Calciumoxid | 3,1% |
| expandierfähige Mikrohohlkugeln | 0,9% |
| Benzochinondioxim | 2,2% |
| ZBEC | 3,0% |
| Schwefel | 2,1% |
| MBTS | 0,7% |
| Tg Produkt | 2 °C |
| tan delta @ 20 °C | 0,91 |
| max. tan delta | 0,93 |
| Shore A | 23 |
| Expansion (30 min @180 °C) | 46% |

### Beispiel 9:

| | |
|---|---|
| DINP | 8,9% |
| Polystyrol-Polybutadien-Block-Copolymer, Tg -7 °C, Styrolgehalt 40 %, vinyl-Gehalt 55 mol%, Mw 10300 g/mol | 41,8% |
| Polybutadien cis-1,4- (fest) | 5,4% |
| Polybutadien mit aktiven Carboxylgruppen (MW = 2100 g/mol) | 2,9% |
| Muskovitglimmer | 24,7% |
| 2,2-Methylen-bis-(4-methyl-6-tert.-butylphenol) | 0,4% |
| Russ | 1,8% |
| Kieselsäure | 1,0% |
| Calciumoxid | 3,1% |
| Azodicarbonamid | 1,0 % |
| Oxi-bis-sulfo-hydrazid | 0,9% |
| Benzolsulfinsaeure-zinksalz | 0,1 % |
| Benzochinondioxim | 2,2% |
| ZBEC | 3,0% |
| Schwefel | 2,1% |
| MBTS | 0,7% |
| Tg Produkt | 8,5 °C |
| tan delta @ 20 °C | 1,26 |
| max. tan delta | 1,29 |
| Shore A | 17 |
| Expansion (30 min @180 °C) | 159 % |

### Beispiel 10:

| | |
|---|---|
| DINP | 8,9% |
| Polystyrol-Polybutadien-Block-Copolymer, Tg -7 °C, Styrolgehalt 40 %, vinyl-Gehalt 55 mol%, Mw 10300 g/mol | 41,8% |
| Polybutadien cis-1,4- (fest) | 5,4% |
| Polybutadien mit aktiven Carboxylgruppen (MW = 2100 g/mol) | 2,9% |
| Aromatisch modifiziertes, aliphatisches Kohlenwasserstoffharz, Tg = 48 °C, Erweichungspunkt 95-101 °C | 8,9% |
| Muskovitglimmer | 15,8% |
| 2,2-Methylen-bis-(4-methyl-6-tert.-butylphenol) | 0,4% |
| Russ | 1,8% |
| Kieselsäure | 1,0% |
| Calciumoxid | 3,1% |
| Azodicarbonamid | 1,0% |
| Oxi-bis-sulfo-hydrazid | 0,9 % |
| Benzolsulfinsaeure-zinksalz | 0,1 % |
| Benzochinondioxim | 2,2% |
| ZBEC | 3,0% |
| Schwefel | 2,1% |
| MBTS | 0,7% |
| Tg Produkt | 20,3 °C |
| tan delta @ 20 °C | 1,32 |
| max. tan delta | 1,49 |
| Shore A | 12 |
| Expansion (30 min @180 °C) | 140 % |

### Beispiel 11:

| Rapsöl | 8,9% |
|---|---|
| Polystyrol-Polybutadien-Block-Copolymer, Tg -7 °C, Styrolgehalt 40 %, vinyl-Gehalt 55 mol%, Mw 10300 g/mol | 41,8% |
| Polybutadien cis-1,4- (fest) | 5,4% |
| Polybutadien mit aktiven Carboxylgruppen (MW = 2100 g/mol) | 2,9% |
| Aromatisch modifiziertes, aliphatisches Kohlenwasserstoffharz, Tg = 48 °C, Erweichungspunkt 95-101 °C | 8,9 % |
| Muskovitglimmer | 15,8 % |
| 2,2-Methylen-bis-(4-methyl-6-tert.-butylphenol) | 0,4% |
| Russ | 1,8% |
| Kieselsäure | 1,0% |
| Calciumoxid | 3,1% |
| Azodicarbonamid | 1,0% |
| Oxi-bis-sulfo-hydrazid | 0,9% |
| Benzolsulfinsaeure-zinksalz | 0,1 % |
| Benzochinondioxim | 2,2% |
| ZBEC | 3,0% |
| Schwefel | 2,1% |
| MBTS | 0,7% |
| Tg Produkt | 12 °C |
| tan delta @ 20 °C | 1,37 |
| max. tan delta | 1,42 |
| Shore A | 15 |
| Expansion (30 min @180 °C) | 128 % |

### Beispiel 12:

| | |
|---|---|
| Rapsöl | 8,9% |
| Polystyrol-Polybutadien-Block-Copolymer, Tg -7 °C, Styrolgehalt 40 %, vinyl-Gehalt 55 mol%, Mw 10300 g/mol | 21,8% |
| Polybutadien cis-1,4- (fest) | 5,4% |
| Polybutadien mit aktiven Carboxylgruppen (MW = 2100 g/mol) | 2,9% |
| Aromatisch modifiziertes, aliphatisches Kohlenwasserstoffharz, Tg = 48 °C, Erweichungspunkt 95-101 °C | 8,9 % |
| Muskovitglimmer | 35,8 % |
| 2,2-Methylen-bis-(4-methyl-6-tert.-butylphenol) | 0,4% |
| Russ | 1,8% |
| Kieselsäure | 1,0% |
| Calciumoxid | 3,1% |
| Azodicarbonamid | 1,0% |
| Oxi-bis-sulfo-hydrazid | 0,9 % |
| Benzolsulfinsaeure-zinksalz | 0,1 % |
| Benzochinondioxim | 2,2% |
| ZBEC | 3,0% |
| Schwefel | 2,1% |
| MBTS | 0,7% |
| Tg Produkt | 19 °C |
| tan delta @ 20 °C | 1,38 |
| max. tan delta | 1,43 |
| Shore A | 11 |
| Expansion (30 min @180 °C) | 168 % |

### Beispiel 13:

| | |
|---|---|
| Rapsöl | 14% |
| Polystyrol-Polybutadien-Block-Copolymer, Tg -7 °C, Styrolgehalt 40 %, vinyl-Gehalt 55 mol%, Mw 10300 g/mol | 21,8% |
| Polybutadien cis-1,4- (fest) | 5,4% |
| Polybutadien mit aktiven Carboxylgruppen (MW = 2100 g/mol) | 2,9% |
| Aromatisch modifiziertes, aliphatisches Kohlenwasserstoffharz, Tg = 48 °C, Erweichungspunkt 95-101 °C | 14,0 % |
| Muskovitglimmer | 25,6% |
| 2,2-Methylen-bis-(4-methyl-6-tert.-butylphenol) | 0,4% |
| Russ | 1,8% |
| Kieselsäure | 1,0% |
| Calciumoxid | 3,1% |
| Azodicarbonamid | 1,0% |
| Oxi-bis-sulfo-hydrazid | 0,9% |
| Benzolsulfinsaeure-zinksalz | 0,1 % |
| Benzochinondioxim | 2,2% |
| ZBEC | 3,0% |
| Schwefel | 2,1% |
| MBTS | 0,7% |
| Tg Produkt | 9 °C |
| tan delta @ 20 °C | 1,40 |
| max. tan delta | 1,42 |
| Shore A | 17 |
| Expansion (30 min @180 °C) | 135 % |

### Beispiel 14

| | |
|---|---|
| Rapsöl | 14 % |
| Polystyrol-Polybutadien-Block-Copolymer, Tg -7 °C, Styrolgehalt 40 %, Vinyl-Gehalt 55 %, Mw 10300 g/mol | 21,8% |
| Polybutadien cis-1,4- (fest) | 5,4% |
| Polybutadien mit aktiven Carboxylgruppen (MW = 2100 g/mol) | 2,9% |
| Aromatisch modifiziertes, aliphatisches Kohlenwasserstoffharz, Erweichungspunkt 89 °C | 14,0 % |
| Muskovitglimmer | 25,6 % |
| 2,2-Methylen-bis-(4-methyl-6-tert.-butylphenol) | 0,4% |
| Russ | 1,8% |
| Kieselsäure | 1,0% |
| Calciumoxid | 3,1% |
| Azodicarbonamid | 1,0% |
| Oxi-bis-sulfo-hydrazid | 0,9 % |
| Benzolsulfinsaeure-zinksalz | 0,1 % |
| Benzochinondioxim | 2,2% |
| ZBEC | 3,0% |
| Schwefel | 2,1% |
| MBTS | 0,7% |
| Tq Produkt | 12,1 °C |
| tan delta @ 20 °C | 1,56 |
| max. tan delta | 1,63 |
| Shore A | 17 |
| Expansion (30 min @180 °C) | 142% |

### Abbildungen

Figur 1:
   Masterkurve für Beispiel 10:
Figur 2
   Masterkurve Beispiel 13:
Figur 3
   Verlustfaktor tan delta in Anlehnung an DIN EN ISO 6721:
Figur 4
   Beispiel einer Anwendung der erfindungsgemäßen Zusammensetzung.
   Oben: Schemazeichnung einer Autotür mit Verstärkungsschiene (Seitenaufprallträger) zum Seitenaufprall-Schutz.
   Unten: isolierte Verstärkungsschiene mit der in zwei Streifen aufgebrachten schwingungsdämpfenden Zusammensetzung

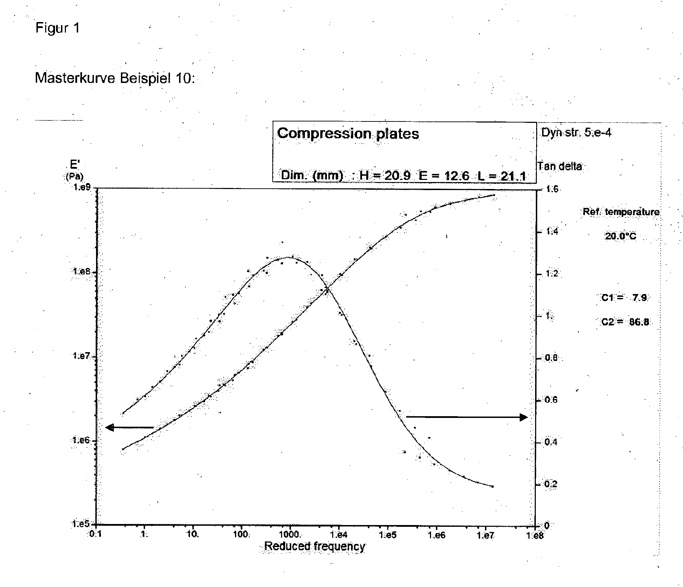

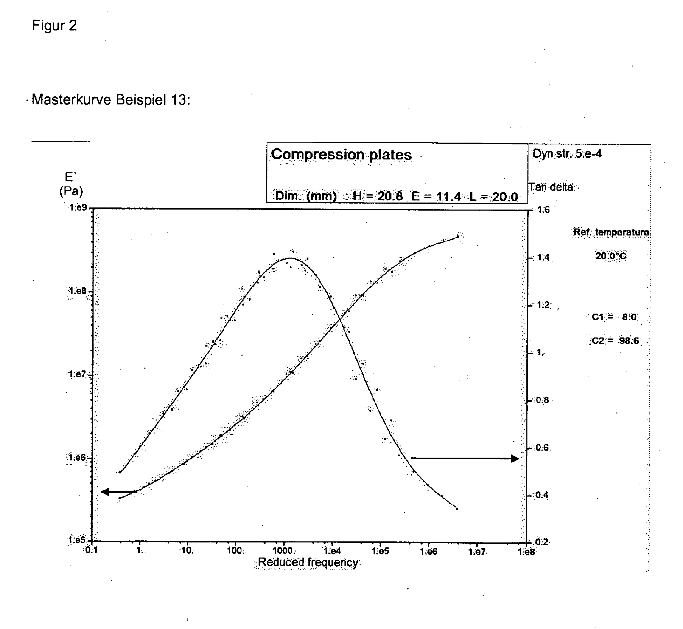

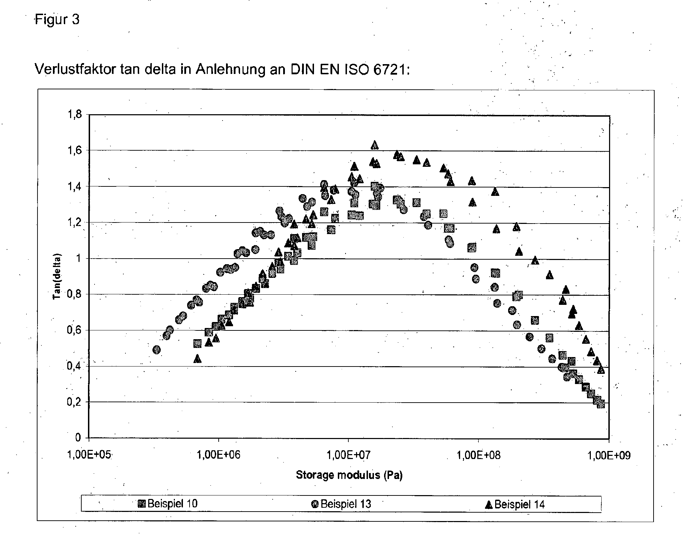

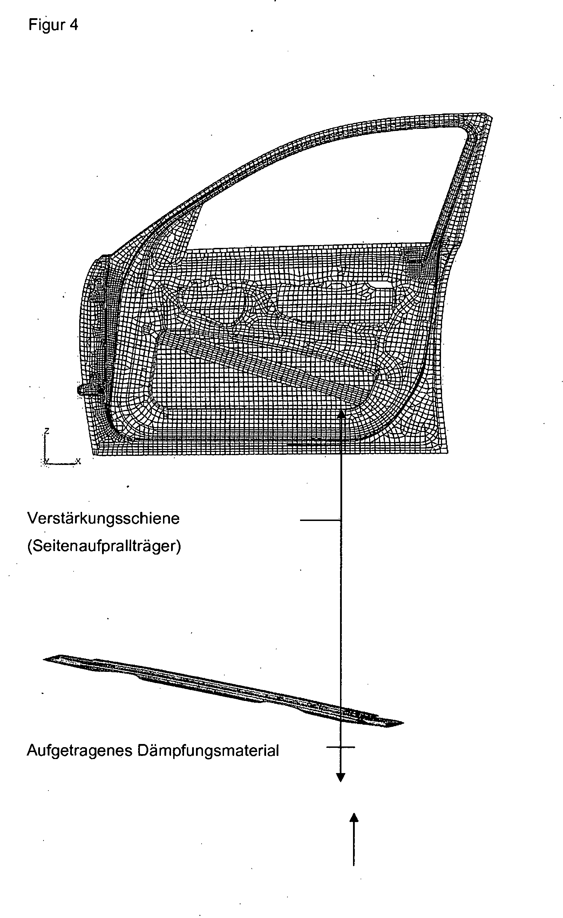

## Patentansprüche

1. Thermisch härtbare Zusammensetzung, enthaltend, bezogen auf die gesamte Zusammensetzung
a) 5 bis 90 Gew.-% eines olefinische Doppelbindungen enthaltenden Copolymers auf Basis eines Diens und eines aromatisch substitiuierten Olefins, wobei das Copolymer bei 22 °C flüssig oder pastös ist, eine Glastemperatur, gemessen nach einer DSC-Methode, zwischen - 30 °C und + 15 °C aufweist, und der Vinyl-Anteil im Dienanteil mindestens 20 mol% beträgt,
b) ein Vulkanisationssystem ausgewählt aus der Gruppe bestehend aus:
b1) Schwefel und einem oder mehreren Beschleuniger(n),
b2) peroxidischen oder disulfidischen Vulkanisationssystemen
b3) Chinonen, Chinondioximen oder Dinitrosobenzol

2. Zusammensetzung nach Anspruch 1, **dadurch gekennzeichnet, dass** das Copolymer a) ein Copolymer aus Styrol und einem Dien darstellt.

3. Zusammensetzung nach Anspruch 2, **dadurch gekennzeichnet, dass** das Copolymer a) einen Styrol-Anteil, bezogen auf das gesamte Copolymer, von mindestens 10 Gew.-%, vorzugsweise von mindestens 15 Gew.-%, und von höchstens 60 Gew.-%, vorzugsweise von höchstens 50 Gew.-% aufweist.

4. Zusammensetzung nach einem oder mehreren der Ansprüche 1 bis 3, **dadurch gekennzeichnet, dass** das Copolymer a) eine zahlenmittlere Molmasse von mindestens 1000, vorzugsweise von mindestens 2000 und insbesondere von mindestens 5000, und von höchstens 50000, vorzugsweise von höchstens 35000, insbesondere von höchstens 25000 aufweist.

5. Zusammensetzung nach einem oder mehreren der Ansprüche 1 bis 4, **dadurch gekennzeichnet, dass** der Vinyl-Anteil im Dienanteil mindestens 40 mol% und höchstens 98 mol%, vorzugsweise höchstens 80 mol% beträgt.

6. Zusammensetzung nach einem oder mehreren der Ansprüche 1 bis 5, **dadurch gekennzeichnet, dass** sie als Vulkanisationssystem b), bezogen auf die gesamte Zusammensetzung,
0,5 bis 6,5 Gew.-% Schwefel,
0,25 bis 20 Gew.-% Vulkanisationsbeschleuniger
enthält.

7. Zusammensetzung nach einem oder mehreren der Ansprüche 1 bis 6, **dadurch gekennzeichnet, dass** sie zusätzlich, bezogen auf die gesamte Zusammensetzung, c) 10 bis 45 Gew.-% Füllstoff.
enthält.

8. Zusammensetzung nach einem oder mehreren der Ansprüche 1 bis 7, **dadurch gekennzeichnet, dass** sie zusätzlich, bezogen auf die gesamte Zusammensetzung, d) bis zu 6 Gew.-%, vorzugsweise bis zu 4 Gew.-%, und vorzugsweise mindestens 0,2 Gew.-% Treibmittel enthält.

9. Zusammensetzung nach einem oder mehreren der Ansprüche 1 bis 8, **dadurch gekennzeichnet, dass** sie zusätzlich, bezogen auf die gesamte Zusammensetzung,
e) bis zu 12 Gew.-%, vorzugsweise bis zu 9 Gew.-% und insbesondere bis zu 5 Gew.-%, und vorzugsweise mindestens 1 Gew.-% Festkautschuk und/oder thermoplastische Polymere
und /oder
f) bis zu 25 Gew.-%, vorzugsweise bis zu 12 Gew.-%, und vorzugsweise mindestens 1 Gew.-%, insbesondere mindestens 2,5 Gew.-% Polydien mit einer zahlenmittleren Molmasse im Bereich von 1000 bis 10000 enthält, das Carboxylgruppen aufweist.

10. Zusammensetzung nach einem oder mehreren der Ansprüche 1 bis 9, **dadurch gekennzeichnet, dass** sie zusätzlich, bezogen auf die gesamte Zusammensetzung, g) bis zu 40 Gew.-%, vorzugsweise bis zu 30 Gew.-% und insbesondere bis zu 25 Gew.-%, und vorzugsweise mindestens 2 Gew.-%, insbesondere mindestens 5 Gew.-% Kohlenwasserstofharz enthält.

11. Zusammensetzung nach einem oder mehreren der Ansprüche 1 bis 10, **dadurch gekennzeichnet, dass** sie zusätzlich, bezogen auf die gesamte Zusammensetzung, h) bis zu 40 Gew.-%, vorzugsweise bis zu 30 Gew.-% und insbesondere bis zu 25 Gew.-%, und vorzugsweise mindestens 2 Gew.-%, insbesondere mindestens 5 Gew.-% Weichmacher enthält.

12. Zusammensetzung nach einem oder mehreren der Ansprüche 1 bis 11, **dadurch gekennzeichnet, dass** sie bei einer Temperatur im Bereich von 15 bis 60 °C eine solche Viskosität aufweist, dass sie mit einer Pumpe pumpbar ist.

13. Zusammensetzung nach einem oder mehreren der Ansprüche 1 bis 12, **dadurch gekennzeichnet, dass** nach Aushärten der Zusammensetzung der mit einer DMA-Methode gemessene Verlustfator tan δ bei einer Temperatur im Bereich von -5 °C bis +40 °C mindestens 0,50 beträgt.

14. Verwendung einer Zusammensetzung nach einem oder mehreren der Ansprüche 1 bis 13 als akustisch dämpfendes Material im Fahrzeug- oder Gerätebau.

15. Verfahren zur Applikation einer Zusammensetzung nach einem oder mehreren der Ansprüche 1 bis 13, **dadurch gekennzeichnet, dass** man die Zusammensetzung bei einer Temperatur im Bereich von 15 bis 60 °C mit einer Pumpe zum Applikationsort fördert und im flüssigen oder pastösen Zustand auf ein Substrat aufträgt.

## Claims

1. Thermally curable composition, comprising, based on the total composition
a) 5 to 90 wt % of an olefinic double bond-containing copolymer based on a diene and on an aromatically substituted olefin, wherein said copolymer is liquid or pasty at 22 °C and has a glass transition temperature, measured by a DSC method, between -30 °C and +15 °C, and the vinyl fraction in the diene fraction is at least 20 mol %,
b) a vulcanisation system selected from the group consisting of:
b1) sulfur and one or more accelerator(s),
b2) peroxidic or disulfidic vulcanisation systems
b3) quinones, quinone dioximes or dinitrosobenzene

2. Composition according to claim 1, **characterised in that** the copolymer a) represents a copolymer of styrene and a diene.

3. Composition according to claim 2, **characterised in that** the copolymer a) has a styrene fraction, based on the total copolymer, of at least 10 wt %, preferably at least 15 wt %, and at most 60 wt %, preferably at most 50 wt %.

4. Composition according to one or more of claims 1 to 3, **characterised in that** the copolymer a) has a number average molecular mass of at least 1000, preferably at least 2000 and in particular at least 5000, and at most 50 000, preferably at most 35 000, in particular at most 25 000.

5. Composition according to one or more of claims 1 to 4, **characterised in that** the vinyl fraction in the diene fraction is at least 40 mol %, and at most 98 mol %, preferably at most 80 mol %.

6. Composition according to one or more of claims 1 to 5, **characterised in that** it comprises, based on the total composition,
0.5 to 6.5 wt % sulfur,
0.25 to 20 wt % vulcanisation accelerator
as the vulcanisation system b).

7. Composition according to one or more of claims 1 to 6, **characterised in that** it additionally comprises, based on the total composition,
c) 10 to 45 wt.% filler.

8. Composition according to one or more of claims 1 to 7, **characterised in that** it additionally comprises, based on the total composition,
d) up to 6 wt %, preferably up to 4 wt %, and preferably at least 0.2 wt % blowing agent.

9. Composition according to one or more of claims 1 to 8, **characterised in that** it additionally comprises, based on the total composition,
e) up to 12 wt %, preferably up to 9 wt % and in particular up to 5 wt %, and preferably at least 1 wt % solid rubber and/or thermoplastic polymers and/or
f) up to 25 wt %, preferably up to 12 wt %, and preferably at least 1 wt %, in particular at least 2.5 wt % polydiene with a number average molecular mass in the range of 1000 to 10,000, which possesses carboxylic groups.

10. Composition according to one or more of claims 1 to 9, **characterised in that** it additionally comprises, based on the total composition,
g) up to 40 wt %, preferably up to 30 wt % and in particular up to 25 wt %, and preferably at least 2 wt %, in particular at least 5 wt % hydrocarbon resin.

11. Composition according to one or more of claims 1 to 10, **characterised in that** it additionally comprises, based on the total composition,
h) up to 40 wt %, preferably up to 30 wt % and in particular up to 25 wt %, and preferably at least 2 wt %, in particular at least 5 wt % plasticiser.

12. Composition according to one or more of claims 1 to 11, **characterised in that** at a temperature in the range of 15 to 60 °C it exhibits a viscosity, such that it can be pumped with a pump.

13. Composition according to one or more of claims 1 to 12, **characterised in that** after curing, the loss factor tan δ of the composition measured by a DMA method is at least 0.50 in the temperature range of -5 °C to +40 °C.

14. Use of a composition according to one or more of claims 1 to 13 as an acoustically attenuating material in the automobile or equipment construction industry.

15. Process for applying a composition according to one or more of claims 1 to 13, **characterised in that** said composition is delivered at a temperature in the range of 15 to 60 °C by a pump to the point of application and is coated in the liquid or pasty state onto a substrate.

## Revendications

1. Composition thermodurcissable contenant, rapportés à la composition totale :
a) de 5 à 90 % en poids d'un copolymère contenant des liaisons doubles oléfiniques à base d'un diène et d'une oléfine à substitution aromatique, dans lequel le copolymère est liquide ou pâteux à 22 °C, présente une température de transition vitreuse, mesurée conformément à un procédé DSC, entre -30 °C et +15 °C, et la fraction des groupes vinyle dans la fraction diénique s'élève à au moins 20 moles % ;
b) un système de vulcanisation choisi parmi le groupe constitué par :
b1) du soufre et un ou plusieurs accélérateurs ;
b2) des systèmes de vulcanisation peroxydiques ou disulfuriques ;
b3) des quinones, des quinonedioximes ou du dinitrosobenzène.

2. Composition selon la revendication 1, **caractérisée en ce que** le copolymère a) représente un copolymère de styrène et d'un diène.

3. Composition selon la revendication 2, **caractérisée en ce que** le copolymère a) présente une fraction de styrène, rapportée au copolymère total, d'au moins 10 % en poids, de préférence d'au moins 15 % en poids et au maximum de 60 % en poids, de préférence au maximum de 50 % en poids.

4. Composition selon une ou plusieurs des revendications 1 à 3, **caractérisée en ce que** le copolymère a) présente une masse molaire moyenne en nombre d'au moins 1.000, de préférence d'au moins 2.000 et en particulier d'au moins 5.000 et au maximum de 50.000, de préférence au maximum de 35.000, en particulier au maximum de 25.000.

5. Composition selon une ou plusieurs des revendications 1 à 4, **caractérisée en ce que** la fraction des groupes vinyle dans la fraction diénique s'élève à au moins 40 moles % et au maximum à 98 moles % de préférence au maximum à 80 moles %.

6. Composition selon une ou plusieurs des revendications 1 à 5, **caractérisée en ce qu'**elle contient, à titre de système de vulcanisation b), rapportés à la composition totale, de 0,5 à 6,5 % en poids de soufre, de 0,25 à 20 % en poids d'accélérateurs de la vulcanisation.

7. Composition selon une ou plusieurs des revendications 1 à 6, **caractérisée en ce qu'**elle contient en outre, rapportés à la composition totale,
c) de 10 à 45 % en poids d'une matière de charge.

8. Composition selon une ou plusieurs des revendications 1 à 7, **caractérisée en ce qu'**elle contient en outre, rapportés à la composition totale,
d) jusqu'à 6 % en poids, de préférence jusqu'à 4 % en poids et de préférence au moins 0,2 % en poids d'un ou de plusieurs agents moussants.

9. Composition selon une ou plusieurs des revendications 1 à 8, **caractérisée en ce qu'**elle contient en outre, rapportés à la composition totale,
e) jusqu'à 12 % en poids, de préférence jusqu'à 9 % en poids et en particulier jusqu'à 5 % en poids, et de préférence au moins 1 % en poids de caoutchouc solide et/ou de polymères thermoplastiques et/ou
f) jusqu'à 25 % en poids, de préférence jusqu'à 12 % en poids et de préférence au moins 1 % en poids, en particulier au moins 2,5 % en poids d'un polydiène dont la masse molaire moyenne en nombre se situe dans la plage de 1.000 à 10.000, qui présente des groupes carboxyle.

10. Composition selon une ou plusieurs des revendications 1 à 9, **caractérisée en ce qu'**elle contient en outre, rapportés à la composition totale,
g) jusqu'à 40 % en poids, de préférence jusqu'à 30 % en poids, et en particulier jusqu'à 25 % en poids, et de préférence au moins 2 % en poids, en particulier au moins 5 % en poids d'une résine d'hydrocarbure.

11. Composition selon une ou plusieurs des revendications 1 à 10, **caractérisée en ce qu'**elle contient en outre, rapportés à la composition totale,
h) jusqu'à 40 % en poids, de préférence jusqu'à 30 % en poids et en particulier jusqu'à 25 % en poids, et de préférence au moins 2 % en poids, en particulier au moins 5 % en poids d'un ou de plusieurs plastifiants.

12. Composition selon une ou plusieurs des revendications 1 à 11, **caractérisée en ce qu'**elle présente, à une température dans la plage de 15 à 60 °C, une viscosité telle qu'elle peut être pompée avec une pompe.

13. Composition selon une ou plusieurs des revendications 1 à 12, **caractérisée en ce que**, après durcissement de la composition, le facteur de perte tan δ, mesuré avec un procédé DMA, s'élève à au moins 0,50 dans la plage de températures de -5 °C à +40 °C.

14. Utilisation d'une composition selon une ou plusieurs des revendications 1 à 13, à titre de matière amortissant les bruits dans la construction automobile ou dans la fabrication d'appareils.

15. Procédé pour l'application d'une composition selon une ou plusieurs des revendications 1 à 13, **caractérisé en ce qu'**on transporte la composition à une température dans la plage de 15 à 60 °C avec une pompe jusqu'à l'endroit d'application et on l'applique à l'état liquide ou pâteux sur un substrat.
